Europäisches Patentamt

European Patent Office

Office européen des brevets

(19)

(11) Veröffentlichungsnummer : **0 327 880 B1**

(12) # EUROPÄISCHE PATENTSCHRIFT

(45) Veröffentlichungstag der Patentschrift :
24.06.92 Patentblatt 92/26

(51) Int. Cl.$^5$ : **B01J 37/02**

(21) Anmeldenummer : 89101219.7

(22) Anmeldetag : 25.01.89

(54) **Vorrichtung und Verfahren zur Entfernung von in den Kanälen frisch beschichteter monolithischer bzw. wabenförmigerKatalysatorträger verbliebenem Washcoat sowie Verwendung der Vorrichtung.**

(30) Priorität : 06.02.88 DE 3803579

(43) Veröffentlichungstag der Anmeldung :
16.08.89 Patentblatt 89/33

(45) Bekanntmachung des Hinweises auf die
Patenterteilung :
24.06.92 Patentblatt 92/26

(84) Benannte Vertragsstaaten :
DE

(56) Entgegenhaltungen :
EP-A- 0 148 427
EP-A- 0 157 651
DE-A- 3 215 966
US-A- 4 208 454
US-A- 4 303 454

(73) Patentinhaber : **Degussa Aktiengesellschaft**
**Weissfrauenstrasse 9**
**W-6000 Frankfurt am Main 1 (DE)**

(72) Erfinder : **Dittrich, Ewald**
**Albert-Schweitzer-Strasse 53**
**W-6451 Grosskrotzenburg (DE)**
Erfinder : **Manner, Reinhard, Dr.**
**Bonhoeffer-Strasse 17**
**W-6457 Maintal-Dörnigheim (DE)**
Erfinder : **Birtigh, Gerhard**
**Jenaer Strasse 9**
**W-6369 Nidderau (DE)**
Erfinder : **Schmidt, Felix, Dr.**
**Maurice-Sardorge-Strasse 11**
**W-7888 Rheinfelden (DE)**

**Beschreibung**

Die Erfindung betrifft eine Vorrichtung und ein Verfahren zur Entfernung von in den Kanälen frisch beschichteter monolithischer bzw. wabenförmiger Katalysatorträger verbliebenem Washcoat sowie ein Arbeitsverfahren zum Betrieb dieser Vorrichtung.

Bei der Herstellung monolithischer bzw. wabenförmiger Katalysatoren, z. B. für die Abgasreinigung, werden diese meist zwecks Vergrößerung der Trägeroberfläche mit einem Film aus einem hochoberflächigen, feinteiligen und porösen keramischen Metalloxid, wie $\gamma$-$Al_2O_3$, beschichtet. Die Beschichtung erfolgt meist im Sprüh-oder Tauchverfahren unter Einsatz einer Suspension des Metalloxids. Ein wichtiger Abschnitt der Fertigung besteht in der Entfernung des in den Kanälen der frisch beschichteten monolithischen bzw. wabenförmigen Katalysatorträger verbleibenden nicht adsorbierten Washcoats. Bislang erfolgte diese Entfernung durch Ausblasen mit Preßluft, d. h. der überschüssige Washcoat wurde durch den Impuls eines aufgebrachten Luftstromes vom Festkörper entfernt und weggeschleudert. Dabei entstehen zwangsläufig feine Suspensionspartikel in Tropfenform.

Diese können mit vernünftigem technischen Aufwand nicht vollständig in Sammelbehältern o. ä. aufgefangen werden, so daß im Laufe der Betriebszeit es zu nicht unerheblichen Anlagenverschmutzungen durch Belegen mit angetrocknetem Washcoat kommt. Dies kann soweit führen, daß die mechanische Funktionstüchtigkeit der Anlagenteile beeinträchtigt wird. Dem läßt sich nur mit erheblichem, regelmäßigen Reinigungsaufwand entgegenwirken. Darüber hinaus kann besonders fein vernebelter Washcoat zu Aerosolbildung führen und die umgehende Atmosphäre beeinträchtigen. Dem muß durch Installation von angepaßten Absaugvorrichtungen entgegengewirkt werden.

Es bestand daher das dringende Bedürfnis nach einer verbesserten Arbeitsweise.

Aus der US-A-4 208 454 war zwar schon eine Vorrichtung zur Entfernung und Wiedergewinnung von in den Kanälen frisch beschichteter monolithischer bzw. wabenförmiger Katalysatortäger verbliebenen Washcoat bekannt, welche besteht aus einer zumindest eine untere Mantelfläche eines Trägers abdichtend umgreifende und unterhalb des Trägers einen Sammelraum bildende Kammer, einem in die Kammer integrierten Trenngefäß für die Abscheidung von Washcoat, in dessen oberem Abschnitt eine zu einem Saugzuggebläse führende Abluftleitung mündet und in dessen Boden ein Ablaufstutzen angeordnet ist, der implizit mit einer Flüssigkeitspumpe in Verbindung steht, doch waren infolge der unmittelbaren Kombination von Kammer und Trenngefäß deren Funktionen nicht voneinander trennbar und es bestand wegen des beim Betrieb der Vorrichtung stets auf alle Kanäle eines gegebenen Katalysatorträgers ausgeübten Saugzuges das Erfordernis, leistungsstarke, mit großer Volumenkapazität arbeitende Unterdruckerzeuger zu installieren.

Die Erfindung stellt eine Vorrichtung vor, welche infolge der Entkopplung von Saugkammer und Trenngefäß sehr störungssicher ist, insbesondere mit einer niedrigen Unterdruckleistung auskommt und sich leicht automatisieren läßt.

Diese Aufgabe wird gelöst durch eine Vorrichtung zur Entfernung und Wiedergewinnung von in den Kanälen frisch beschichteter monolithischer bzw. wabenförmiger Katalysatorträger verbliebenem Washcoat aus einer zumindest die untere Mantelfläche des Trägers abdichtend umgreifenden und unterhalb des Trägers einen Sammelraum bildenden Kammer sowie einem damit verbundenen Trenngefäß für die Abscheidung von Washcoat, in dessen oberem Abschnitt eine zu einem Saugzuggebläse führende Abluftleitung mündet und in dessen Boden ein Ablaufstutzen angeordnet ist, der mit einer Flüssigkeitspumpe in Verbindung steht.

Die Vorrichtung ist dadurch gekennzeichnet, daß die Kammer eine auf der oberen Stirnfläche des Trägers oder auf einem nur knapp über die Stirnfläche vorstehenden Rand der Kammer dichtend aufliegende und über die Stirnfläche hinweg bewegliche Platte mit einem oder mehreren dabei nacheinander alle Kanäle des Trägers bestreichenden Belüftungsschlitzen aufweist, der Sammelraum der Kammer einen Ablauf hat und das Trenngefäß als ein separates Gefäß vorliegt, das mit der Kammer durch eine mit einem Absaugventil und mit dem Ablauf des Sammelraums verbundene Förderleitung für Washcoat und Luft verbunden ist.

Zur Abdichtung zwischen Trägermantelfläche und Kammerwand kann eine Dichtmanschette dienen, welche aus einem elastischen aufblasbaren Hohlkörper besteht.

Die Vorrichtung wird im Gegensatz zu der in US-A-4 208 454 beschriebenen Vorrichtung nicht mit einer oben stets offenbleibenden Trägerstirnfläche betrieben. Sie wird vielmehr wegen der Gleichmäßigkeit der Washcoat-Entfernung vorzugsweise mit der mit ihrem oberen Rand nur knapp oberhalb der oberen Trägerstirnfläche endigenden Kammer in Verbindung mit einem sie abdeckenden Schlitzschieber betrieben. Dieser ermöglicht, nacheinander einen eine oder mehrere Kanäle umfassenden Abschnitt der Trägerstirnfläche separat von überschüssigem Washcoat zu befreien. Durch die räumlich geschlossene Verbindung zwischen den separaten Teilen Trägereinsetzkammer und Trenn- bzw. Abscheidungsgefäß kann eine Verschmutzung der Umgebung durch ausgeblasenen Washcoat-Spray sicher vermieden werden. Die Vorrichtung kann verschiedene vorteilhafte Ausführungsformen umfassen.

So kann die über die Trägerstirnfläche hinweg bewegliche Schlitzplatte linear verschieblich angeordnet sein, wobei der Belüftungsschlitz senkrecht zur Bewegungsrichtung steht und dabei eine dem größten Durchmesser des Trägers entsprechende Länge aufweist.

Die lineare Verschieblichkeit kann gewährleistet werden durch eine über eine Druckfederanordnung mit einem auf beiderseits der Kammer und oberhalb dieser angeordneten Schienen laufenden Wagen oder Schlitten verbundene und an den oberen Rand der Kammer angedrückte Schlitzplatte.

Die Ausführung und Lagerung einer Schlitzplatte als Drehschieber ist ebenfalls möglich, wobei die Schlitzlänge dem größten Halbmesser des Trägers entspricht. Der, bzw. jeder Belüftungsschlitz kann mindestens so breit sein, wie der größte lichte Durchmesser eines Monolithkanals.

Bevorzugt wird, daß bei Vorliegen mehrerer Schlitze diese parallel zueinander angeordnet sind.

Die Formgebung für das Trenngefäß ist keinen Beschränkungen unterworfen. Als vorteilhafte Variante ist jedoch die Verwendung eines Zyklons als Trenngefäß für die Washcoatabscheidung vorgesehen.

Ein weiterer Gegenstand der Erfindung ist ein Verfahren zur Entfernung und Wiedergewinnung von in den Kanälen frisch beschichteter monolithischer bzw. wabenförmiger Katalysatorträger verbliebenem Washcoat unter Einsatz der beschriebenen Vorrichtung. Das Verfahren ist dadurch gekennzeichnet, daß man den Katalysatorträger bei geschlossenem Absperrventil in die Kammer dichtend einsetzt, dann das Absaugeventil mindestens einmal öffnet, die Schlitzplatte über die obere Stirnfläche des Trägers bewegt, aus dem in das Trenn-bzw. Abscheidungsgefäß überführten Washcoat/Luft-Gemisch laufend die Luft absaugt und die sich sammelnde flüssige Phase ständig oder alternierend abpumpt.

Die erfindungsgemäße Vorrichtung kann in einer gegebenenfalls automatisierten Anlage zur Fertigung monolithischer bzw. wabenförmiger Abgasreinigungskatalysatoren betrieben werden.

Die Erfindung wird im folgenden anhand der Zeichnung sowie anhand einer Funktionsbeschreibung der Vorrichtung weiter erläutert.

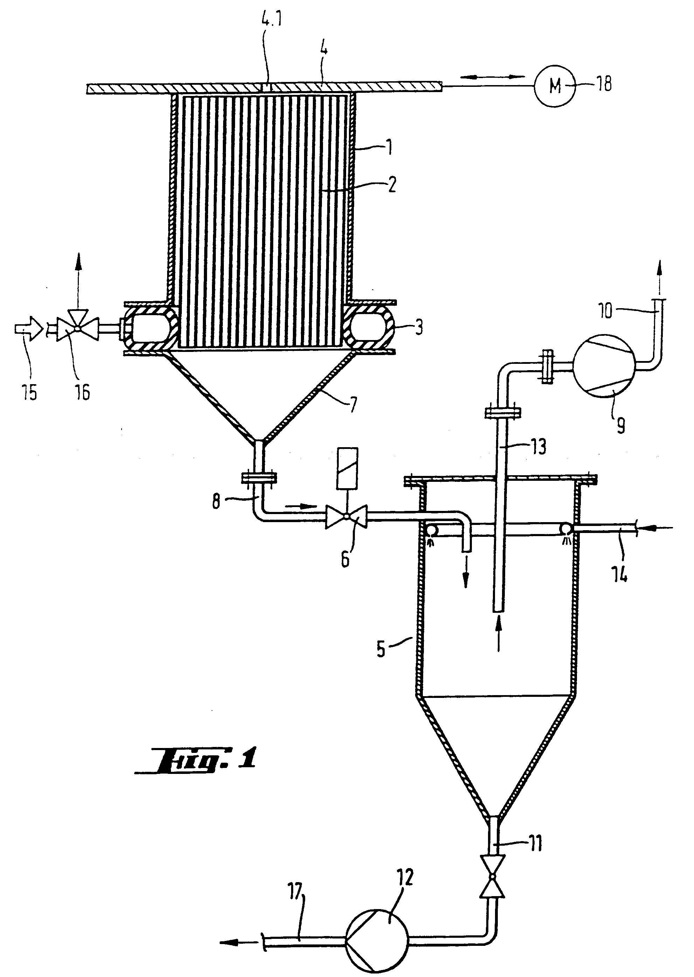

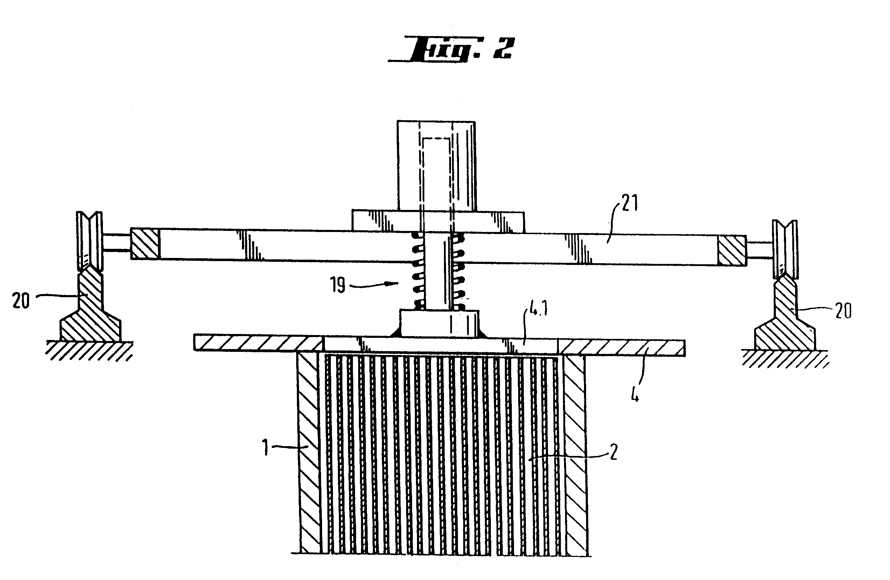

Die Zeichnung zeigt in Fig. 1 das Schema der Gesamtvorrichtung mit beweglicher Schlitzplatte sowie in Fig. 2 das Detail des oberen Abschnitts der Monolitheinsetzkammer von Fig. 1 mit der darüber angeordneten Konstruktion zur Bewegung der Platte.

Gemäß Fig. 1 besteht die gesamte Vorrichtung aus einer Kammer 1, die den Träger 2 voll aufnimmt und ihn am unteren Ende mit einer Dichtmanschette 3 abschließt. Die bewegliche Schlitzplatte ist mit 4 gekennzeichnet, sie liegt auf dem Rand der Kammer 1 auf, welcher gegenüber der Stirnfläche des Trägers nur unwesentlich höher liegt (Spiel von < 1 mm). Das Trenngefäß für die Scheidung des Washcoat/Luft-Gemisches ist mit 5 bezeichnet. Der Suspensionsablauf 7 ist mit der Förderleitung 8 und diese mit dem Absaugventil 6 verbunden. Von letzterem führt eine Leitung zum Trenngefäß 5. Der Vakuumerzeuger 9 fördert die Abluft über die Leitungen 13 und 10. über Leitung 14 wird Wasser in das Trenngefäß eingedüst. Die Preßluftzufuhr 15 bewirkt die Abdichtung zwischen Manschette 3 und Träger 2, zu dessen Steuerung dient das Ventil 16. Über den als Rührstutzen ausgebildeten Ablaufstutzen 16 gelangt die Suspension über Pumpe 12 zur Weiterverarbeitung 17.

Der Betrieb der Vorrichtung gestaltet sich wie folgt:

Der monolithische bzw. wabenförmige Träger 2 wird in die offene oder geöffnete Kammer 1 eingebracht. Die Einbringung erfolgt bei geschlossenem Absaugventil 6. Sodann erfolgt die Öffnung des Ventils 16 für die Preßluftzufuhr 15 zur Abdichtung des Trägermantels gegenüber Kammer 1 mittels der aus einem elastischen Material bestehenden Dichtmanschette 3. Gleichzeitig sorgt der Vakuumerzeuger 9 über Saugzug 13 im Trenngefäß 5 für Unterdruck.

Durch einmaliges oder mehrfaches, beispielsweise pulsierendes Öffnen des Ventils 6 wird im Trägerinnern 2 Unterdruck erzeugt und überschüssige Suspension und Luft über Suspensionsablauf 7 und Förderleitung 8 dem Trenngefäß 5 zugeführt. Aus dem Trenngefäß 5 wird laufend die Luft über 13, 9, 10 abgesaugt. Die sich ansammelnde flüssige Phase wird ständig oder alternierend über 11, 12 abgepumpt und der Weiterverarbeitung 17 zugeführt. Die Wassereindüsung 14 sorgt für eine geeignete Viskositätseinstellung der abzupumpenden Suspension.

Die Schlitzplatte 4 wird nach Öffnen des Ventils 6 mittels Motorantrieb 18 in engem Abstand linear über die Trägerstirnfläche bewegt. Schlitzbreite und Bewegungsgeschwindigkeit sind variabel dimensionierbar.

Fig. 2 zeigt eine über eine Druckfederanordnung 19 mit einem auf beiderseits der Kammer 1 und oberhalb dieser angeordneten Schienen 20 laufenden Wagen 21 verbundene und an den oberen Rand der Kammer angedrückte Schlitzplatte 4.

**Patentansprüche**

1. Vorrichtung zur Entfernung und Wiedergewinnung von in den Kanälen frisch beschichteter monolithischer bzw. wabenförmiger Katalysatorträger verbliebenem Washcoat aus einer zumindest die untere Mantelfläche des Trägers (2) abdichtend umgreifenden und unterhalb des Trägers einen Sammelraum bildenden Kammer (1) sowie einem damit verbundenen Trenngefäß für die Abscheidung von Washcoat, in dessen oberem Abschnitt eine zu einem Saugzuggebläse führende Ablüftleitung mündet und in dessen Boden ein Ablaufstutzen angeordnet ist, der mit einer Flüssigkeitspumpe in Verbindung steht,

**dadurch gekennzeichnet,**

daß die Kammer (1) eine auf der oberen Stirnfläche des Trägers oder auf einem nur knapp über die Stirnfläche vorstehenden Rand der Kammer dichtend aufliegende und über die Stirnfläche hinweg bewegliche Platte (4) mit einem oder mehreren dabei nacheinander alle Kanäle des Trägers bestreichenden Belüftungsschlitzen (4.1) aufweist, der Sammelraum der Kammer (1) einen Ablauf (7) hat und das Trenngefäß als ein separates Gefäß (5) vorliegt, das mit der Kammer (1) durch eine mit einem Absaugventil (6) und mit dem Ablauf des Sammelraums verbundene Förderleitung (8) für Washcoat und Luft verbunden ist.

2. Vorrichtung nach Anspruch 1,

**dadurch gekennzeichnet,**

daß die Platte (4) linear verschieblich angeordnet ist, der Belüftungsschlitz (4.1) senkrecht zur Bewegungsrichtung steht und eine dem größten Durchmesser des Trägers entsprechende Länge aufweist.

3. Vorrichtung nach Anspruch 1 oder 2,

**gekennzeichnet durch**

eine über eine Druckfederanordnung (19) mit einem auf beiderseits der Kammer (1) und oberhalb dieser angeordneten Schienen (20) laufenden Wagen oder Schlitten (21) verbundene und an den oberen Rand der Kammer angedrückte Schlitzplatte (4).

4. Vorrichtung nach Anspruch 1 oder 2,

**dadurch gekennzeichnet,**

däß die Schlitzplatte (4) als Drehschieber ausgebildet und gelagert ist, wobei die Schlitzlänge dem größten Halbmesser des Trägers entspricht.

5. Vorrichtung nach den Ansprüchen 1 bis 4,

**dadurch gekennzeichnet,**

daß der bzw. jeder Belüftungsschlitz (4.1) mindestens so breit ist wie der größte lichte Durchmesser eines Monolithkanals.

6. Vorrichtung nach den Ansprüchen 1 bis 5,

**dadurch gekennzeichnet,**

daß beim Vorliegen mehrerer Schlitze (4.1) diese parallel zueinander angeordnet sind.

7. Vorrichtung nach den Ansprüchen 1 bis 6,

**dadurch gekennzeichnet,**

daß als Trenngefäß (5) für die Washcoatabscheidung ein Zyklon verwendet wird.

8. Verfahren zur Entfernung und Wiedergewinnung von in den Kanälen frisch beschichteter monolithischer bzw. wabenförmiger Katalysatorträger verbliebenem Washcoat unter Einsatz der Vorrichtung nach den vorstehenden Ansprüchen,

**dadurch gekennzeichnet,**

daß man den Katalysatorträger bei geschlossenem Absaugventil (6) in die Kammer (1) dichtend einsetzt, dann Ventil (6) mindestens einmal öffnet, die Schlitzplatte (4) über die obere Stirnfläche des Trägers bewegt, aus dem in das Trenn- bzw. Abscheidungsgefäß (5) überführten Washcoat/Luft-Gemisch laufend die Luft absaugt und die sich sammelnde flüssige Phase ständig oder alternierend abpumpt.

## Claims

1. Device for removing and recovering washcoat which has remained in the channels of freshly coated monolithic or honeycomb catalyst supports, comprising a chamber (1) which sealingly surrounds at least the lower shell surface of the support (2) and, underneath the support, forms a collection space and a separator vessel connected thereto for precipitating washcoat, an exit air line, which leads to an extraction fan, ending in the upper section of the separator vessel, and an outflow branch communicating with a liquids pump being provided in the bottom of the separator vessel,

characterized in that

the chamber (1) has a plate (4), which rests sealingly on the upper end face of the support or on a chamber rim only just projecting beyond the end face and is movable past the end face and which has one or more venting slots (4.1) which then sweep successively across all the channels of the support, the collection space of the chamber (1) has an outflow (7) and the separator vessel is in the form of a separate vessel (5) which is connected to the chamber (1) by a transport line (8) for washcoat and air, connected to a suction valve (6) and to the outflow of the collection space.

2. Device according to Claim 1,
characterized in that
the plate (4) is arranged to be linearly displaceable, the venting slot (4.1) is perpendicular to the direction of movement and has a length corresponding to the geatest diameter of the support.

3. Device according to Claim 1 or 2,
characterized by
a slotted plate (4) which is joined via a compression spring arrangement (19) to a carriage or slide (21) running on rails (20) arranged on both sides of the chamber (1) and above the latter and is pressed down on the upper rim of the chamber.

4. Device according to Claims 1 or 2,
characterised in that
the slotted plate (4) is constructed and mounted as a rotary slide, the slot length corresponding to the greatest radius of the support.

5. Device according to Claims 1 to 4,
characterised in that
the venting slot (4.1) or each of the venting slots is/are at least as wide as the greatest internal diameter of a monolith channel.

6. Device according to Claims 1 to 5,
characterised in that,
if there is a plurality of slots (4.1), these are in a mutually parallel arrangement.

7. Device according to Claims 1 to 6,
characterised in that
a cyclone is used as the separator vessel (5) for the precipitation of washcoat.

8. Process for removing and recovering washcoat which has remained in the channels of freshly coated monolithic or honeycomb catalyst supports, with the use of the device according to the preceding claims, characterised in that
the catalyst support is sealingly inserted into the chamber (1) while the suction valve (6) is closed, the valve (6) is then opened at least once, the slotted plate (4) is moved across the upper end face of the support, the air is continuously extracted from the washcoat/air mixture transferred into the separator or precipitation vessel (5) and the collecting liquid phase is pumped out continuously or intermittently.

## Revendications

1. Dispositif pour l'enlèvement et la récupération de primaire restant dans les canaux de supports de catalyseurs monolithiques ou en nid d'abeilles, fraîchement revêtus, constitué d'une chambre (1) entourant étroitement au moins la face inférieure externe du support (2) et constituant un espace collecteur au-dessous du support, ainsi que d'un récipient séparateur relié à celle-ci, pour la séparation du primaire, dans la section supérieure duquel débouche un conduit d'évacuation d'air conduisant à un ventilateur d'aspiration, et dans le fond duquel est placé un conduit d'évacuation qui est raccordé à une pompe à liquide, dispositif
caractérisé en ce que
la chambre (1) comporte une plaque (4) qui se trouve placée de façon étanche au-dessus de la face frontale supérieure du support ou sur un bord de la chambre ne dépassant qu'à peine la face frontale, et mobile au-dessus de la face frontale, comportant une ou plusieurs fentes d'aération (4.1) balayant successivement tous les canaux du support, en ce que l'espace collecteur de la chambre (1) comporte un conduit d'évacuation (7) et le récipient collecteur se trouve sous forme d'un récipient séparé (5) qui est relié à la chambre (1) par un conduit de transport (8) pour air et primaire, comportant une vanne d'aspiration (6) et est relié au conduit de sortie de l'espace collecteur.

2. Dispositif selon la revendication 1,
caractérisé en ce que
la plaque (4) est disposée de manière à être apte à un déplacement linéaire, la fente d'aération (4.1) est perpendiculaire à la direction du déplacement et présente une longueur correspondant au plus grand diamètre du support.

3. Dispositif selon la revendication 1 ou 2,
caractérisé par
une plaque à fente (4) pressée sur le bord supérieur de la chambre et reliée par un dispositif à ressort à pression (19) à un chariot ou une pièce coulissante (21) qui se déplace sur des rails disposés des deux côtés de la chambre (1) et au-dessus de celle-ci.

4. Dispositif selon la revendication 1 ou 2,
caractérisé en ce que
la plaque à fente (4) a la configuration et est placée en tant que barre tournante, la longueur de la fente correspondant au plus grand rayon du support.

5. Dispositif selon l'une quelconque des revendications 1 à 4,
caractérisé en ce que
la ou chaque fente d'aération (4.1) est au moins aussi large que le plus grand diamètre libre d'un canal monolithique.

6. Dispositif selon l'une quelconque des revendications 1 à 5,
caractérisé en ce que,
lorsqu'il y a plusieurs fentes (4.1) celles-ci sont parallèles entre elles.

7. Dispositif selon l'une quelconque des revendications 1 à 6,
caractérisé en ce que,
en tant que récipient séparateur (5), pour la séparation du primaire, on utilise un cyclone.

8. Procédé pour l'enlèvement et la récupération de primaire restant dans les canaux de supports de catalyseurs monolithiques ou en nid d'abeilles, fraîchement revêtus, avec utilisation du dispositif selon les revendications précédentes,
caractérisé en ce que
l'on insère étroitement dans la chambre (1) le support de catalyseur, la vanne d'aspiration (6) étant fermée, puis on ouvre au moins une fois la vanne (6), on déplace la plaque à fente (4) au-dessus de la face frontale supérieure du support, on aspire en continu l'air hors du mélange d'air/primaire transféré dans le récipient séparateur ou de dépôt (5) et on évacue par pompage, alternativement on en continu, la phase liquide qui s'accumule.

**Fig. 1**

Fig. 2